# EUROPEAN PATENT SPECIFICATION

(11) **EP 4 183 835 B1**
(45) Date of publication and mention of the grant of the patent: **12.11.2025**
(21) Application number: 22194863.1
(22) Date of filing: 09.09.2022
(51) Int. Cl.: C08L 71/00, C08L 79/08, B32B 27/08, C08J 5/18

(54) **THERMOPLASTIC FILMS AND METHODS FOR COATING THERMOPLASTIC SUBSTRATES WITH THERMOSET MATERIALS**
THERMOPLASTISCHE FOLIEN UND VERFAHREN ZUR BESCHICHTUNG VON THERMOPLASTISCHEN SUBSTRATEN MIT WÄRMEHÄRTBAREN MATERIALIEN
FILMS THERMOPLASTIQUES ET PROCÉDÉS DE REVÊTEMENT DE SUBSTRATS THERMOPLASTIQUES AVEC DES MATÉRIAUX THERMODURCIS

(30) Priority: 19.11.2021 US 202117530978
(43) Date of publication of application: 24.05.2023
(73) Proprietor: The Boeing Company, Arlington, VA 22202 (US)
(72) Inventor: SHI, Ying, Chicago, 60606-2016 (US); LUCHINI, Timothy J, Chicago, 60606-2016 (US); PANTOJA, Marcos, Chicago, 60606-2016 (US); RUBIN, Alexander M, Chicago, 60606-2016 (US)
(74) Representative: Boult Wade Tennant LLP

(56) References cited:
- EP-A1- 2 899 231
- EP-A1- 3 854 834
- WO-A1-2006/006508
- US-A1- 2003 186 068
- US-A1- 2021 102 068
- HARRIS J. E. ET AL: "Miscible blends of poly(aryl ether ketone)s and polyetherimides", JOURNAL OF APPLIED POLYMER SCIENCE, vol. 35, no. 7, 20 May 1988 (1988-05-20), US, pages 1877 - 1891, XP093045720, ISSN: 0021-8995, DOI: 10.1002/app.1988.070350713
- CREVECOEUR G ET AL: "BINARY BLENDS OF POLY(ETHER ETHER KETONE) AND POLY(ETHER IMIDE). MISCIBILITY, CRYSTALLIZATION BEHAVIOR, AND SEMICRYSTALLINE MORPHOLOGY", MACROMOLECULES, AMERICAN CHEMICAL SOCIETY, US, vol. 24, no. 5, 4 March 1991 (1991-03-04), pages 1190 - 1195, XP000219313, ISSN: 0024-9297, DOI: 10.1021/MA00005A034

## Description

### BACKGROUND

This application relates to thermoplastic compositions and, more specifically, to thermoplastic films and methods for coating thermoplastic substrates with thermoset materials in the aerospace industry.

The process of finishing polyaryletherketone-based structural thermoplastic composites presents challenges, specifically with respect to medium and large-scale components, particularly those used in airstream applications. Current surface treatment techniques include the need for mechanically treating substrate surfaces using techniques such as sand blasting, grit blasting, plasma treatment, and other techniques that roughen substrate surfaces prior to bonding with a thermoset material.

Conventional surface treatment techniques present challenges with respect to adhesion and miscibility. Therefore, those skilled in the art continue with research and development efforts in the field of coating thermoplastic substrates with thermoset materials.

WO 2006/006508 states: "to a layered product comprising a metallic object and, superposed on at least one side thereof in the following order, a metal contact layer and a surface layer, wherein the metal contact layer comprises a resin composition comprising 100 parts by mass of a resin ingredient comprising a thermoplastic polyimide resin (A) and a polyaryl ketone resin (B) in an (A)/(B) ratio of from 95/5 to 5/95 by mass and 0-100 parts by mass of a filler (C) and/or 0-100 parts by mass of a solid lubricant (D), and the surface layer comprises a resin composition comprising 100 parts by mass of a polyaryl ketone resin (B) and 0-100 parts by mass of a filler (C) and/or 0-100 parts by mass of a solid lubricant (D). The layered product is suitable for use as a mechanical member, automotive part, etc." US 2021/102068 states: "Insulating films suitable for use in magnet wire, electrical machines, and other applications may include at least one layer formed from extruded material. The extruded material may include a blend of a first polymeric material and a second polymeric material different than the first polymeric material. The first polymeric material may include one of polyetheretherketone, polyaryletherketone, polyetherketoneketone, polyphenylsulfone, polyphenylene sulfide, or polybenzimidazole, and the second polymeric material may include one of polyphenylsulfone, polyetherimide, polyethersulfone, polyphenylene sulfide, polycarbonate, or polyester." US 2003/186068 states: "a heat resistant resin composition comprising 70 to 30 wt % of a crystalline polyarylketone resin having a peak melting temperature of crystal of 260° C. or higher and 30 to 70 wt % of a noncrystalline polyetherimide resin, wherein said composition has at least 2 peaks of loss tangent (tan delta) between 140° C. and 250° C., determined by dynamic mechanical measurement." EP2899231 states: "an aerospace article comprising at least one part made of a composition [composition (C)] comprising : i. from 35 to 98 % by weight (wt. %) of a polymeric material and 2-65 wt. % of two fillers. Polymer-composition comprises: from 25-85 wt. % of at least one polyetherimide polymer from 15-75 wt. % of at least one polyaryletherketone polymer. Filler comprises: from 5-95 wt. % of fibrous filler (such as Carbon fibers) from 5-95 wt. % of at least one mineral filler (such as Boron Nitride)." EP3854834 states: "compositions of polyarylether ketone copolymers and polyetherimides having improved thermal resistance and mechanical properties, to a method of making the same, and to the use thereof in various fields." Harris J. E. et al: "Miscible blends of poly(aryl ether ketone)s and polyetherimindes", Journal of Applied Polymer Science, vol. 35, no. 7, 20 May 1988, pages 1877-1891 states: "the mixture of poly(aryl ether ketone)s with Ultem polyetherimide. In particular it relates to the crystallization kinetics, mechanical properties and chemical resistance of the mixture." Crevecoeur G et al. "Binary blends of Poly(ether ether ketone) and poly ether imide). Miscibiity, crystallization behaviour, and semicrystalline morphology", Macromolecules, American Chemical Society, US, vol. 24, no. 5, 4 March 1991, pages 1190-1195 states: "miscibility and crystalline behaviour of blends of poly(ether ether ketone) (PEEK) and poly(ether imide) (PEI). There was miscibility in the amorphous state over the entire composition range. Crystallization of PEEK was slower in the blends than in the pure compound. Upon crystallization, PEEK separated from the miscible amorphous state, causing a shift in the composition of the amorphous phase. PEI was found to be located outside the crystalline lamellae of PEEK. Correspondingly, the crystallinity of PEEK in the crystallized blends did not change largely with composition."

### SUMMARY

The present disclosure is directed to a method for coating a thermoplastic substrate with a thermoset material, the method comprising: applying the thermoplastic composition (120') comprising: a thermoplastic polymer (116); and a polyaryletherketone polymer (118) in admixture with the thermoplastic polymer (116), to a first major surface of a thermoplastic substrate; and co-consolidating the thermoplastic composition with the thermoplastic substrate to define a receiving surface for a thermoset material.

Disclosed are thermoplastic compositions. In some examples, the disclosed thermoplastic composition includes a thermoplastic polymer and a polyaryletherketone polymer in admixture with the thermoplastic polymer.

Also disclosed are consolidated laminate structures. In some examples, the disclosed consolidated laminate structure includes a thermoplastic substrate including a thermoplastic polymer and a thermoplastic composition consolidated with the thermoplastic substrate to define a receiving surface. The thermoplastic composition may include a thermoplastic polymer and a polyaryletherketone polymer in admixture with the thermoplastic polymer.

Also disclosed are methods for manufacturing consolidated laminate structures. In some examples, the disclosed method for manufacturing a consolidated laminate structure includes applying a thermoplastic composition to a first major surface of a thermoplastic substrate. The thermoplastic composition may include a thermoplastic polymer and a polyaryletherketone polymer in admixture with the thermoplastic polymer. The method may further include co-consolidating the thermoplastic composition with the thermoplastic substrate to define a receiving surface. The co-consolidating may further comprise compression molding the thermoplastic composition with the first major surface of the thermoplastic substrate.

### BRIEF DESCRIPTION OF THE DRAWINGS

FIG. 1 is a schematic diagram of a method for forming a thermoplastic film;
FIG. 2 is a cross sectional schematic of a laminate structure prior to consolidation;
FIG. 3 is a cross sectional schematic of the laminate structure of FIG. 2 after consolidation;
FIG. 4 is a cross sectional schematic of the laminate structure of FIG. 3 with an additional coating;
FIG. 5 is a cross sectional schematic of the laminate structure of FIG. 4 with an additional coating;
FIG. 6 is a flow diagram of a method for manufacturing a consolidated laminate structure;
FIG. 7 is a block diagram of aircraft production and illustrative methodology; and
FIG. 8 is a schematic illustration of an aircraft.

### DETAILED DESCRIPTION

Disclosed are compositions and methods for chemically modifying a receiving surface of a thermoplastic composite substrate. The compositions and methods improve compatibility of a thermoplastic composite substrate and a thermoset coating, such as an epoxy-based primer. The disclosed compositions and methods account for threshold adhesive properties with the thermoset coating and miscibility of the components of the compositions. The result is a modified surface of the thermoplastic composite material to enhance compatibility to a thermoset coating.

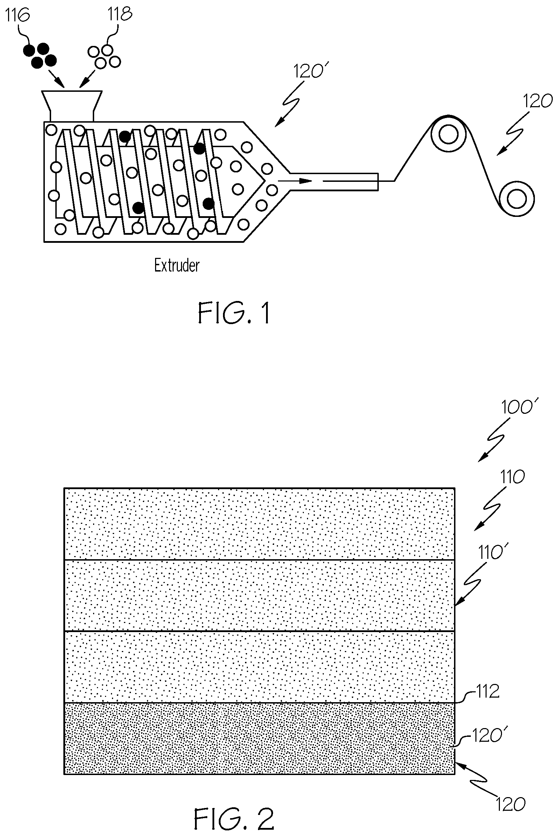

Referring to FIG. 1, disclosed is a thermoplastic composition 120'. The thermoplastic composition includes a thermoplastic polymer 116 and a polyaryletherketone polymer 118 in admixture with the thermoplastic polymer 116. The thermoplastic composition may be manufactured by combining and blending the thermoplastic polymer and the polyaryletherketone polymer 118 in an extruder and extruding the resulting composition into a coating, such as a film 120.

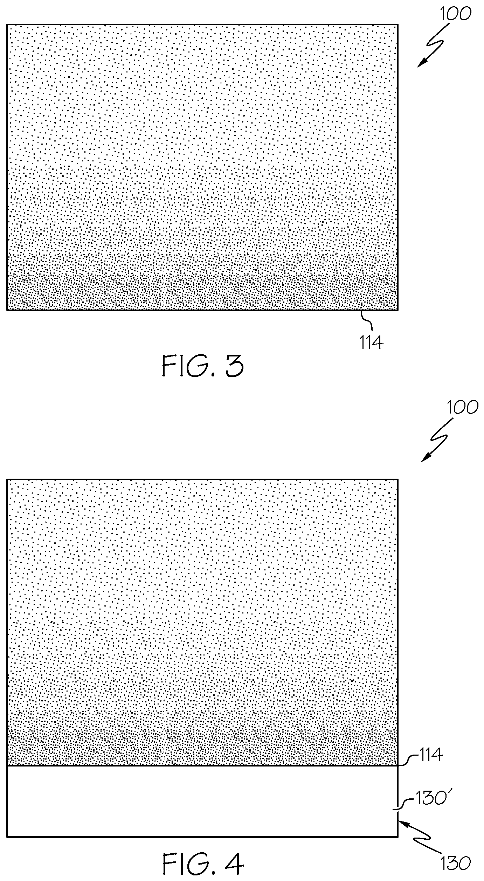

As shown in FIGs. 2 and 4, the thermoplastic polymer 116 (FIG. 1) of the thermoplastic composition 120' may be selected based upon material properties such as threshold adhesive properties that align with a mating thermoset coating 130 and miscibility with the thermoplastic substrate 110 material such that a first major surface 112 of a receiving thermoplastic substrate 110 is modified to enhance compatibility with a thermoset coating 130. Further, the thermoplastic polymer 116 is miscible with polyaryletherketone polymers. In some examples, the thermoplastic polymer 116 of the thermoplastic composition 120' includes polyetherimide. The thermoplastic polymer 116 may be amorphous. The thermoplastic polymer 116 is compatible with aerospace grade paints and coatings and is stable at processing temperatures of at least about 350°C (or at least 350°C).

In some examples, the polyaryletherketone polymer 118 is a semi-crystalline material belonging to the family of polyaryletherketone (PAEK) polymers. The polyaryletherketone polymer 118 may be in the form of a film plastic pellets, powder, etc. The polyaryletherketone polymer 118 may include polyether ether ketone. In other examples, the polyaryletherketone polymer includes polyether ketone ketone. In yet other examples, the polyaryletherketone polymer includes a blend of at least two polyaryletherketones. For example, the polyaryletherketone polymer may include a blend of polyether ketone ketone and polyether ether ketone.

The thermoplastic composition 120' has a melting temperature based upon the ratio of thermoplastic polymer 116 to the polyaryletherketone polymer 118 and the respective melting temperatures of each of the thermoplastic polymer to the polyaryletherketone polymer 118. In some examples, the melting temperature of the polyaryletherketone polymer 118 is about 275 °C to about 350 °C (or 275 °C to 350 °C). In other examples, the melting temperature of the polyaryletherketone polymer 118 is at least about 300 °C (or at least 300 °C).

The thermoplastic composition 120' includes a ratio of the thermoplastic polymer 116 to the polyaryletherketone polymer 118. In some examples, the ratio of the thermoplastic polymer 116 to the polyaryletherketone polymer 118 by weight is between about 1:20 and about 1:1 (or between 1:20 and 1:1). In other examples, the ratio of the thermoplastic polymer 116 to the polyaryletherketone polymer 118 by weight is between about 10:90 and about 50:50 (between 10:90 and 50:50). In other examples, the ratio of the thermoplastic polymer 116 to the polyaryletherketone polymer 118 by weight is between about 1:9 and about 1:1 (or between 1:9 and 1:1). In yet other examples, the ratio of the thermoplastic polymer 116 to the polyaryletherketone polymer 118 by weight is between about 20:80 and about 50:50 (or between 20:80 and 50:50).

The thermoplastic composition 120' includes a degree of crystallinity such that it is a semi-crystalline material. In some examples, the degree of crystallinity is from about 1 percent to about 30 percent (or 1 percent to 30 percent). In other examples, the degree of crystallinity is from about 2 percent to about 15 percent (or 2 percent to 15 percent). In yet other examples, the degree of crystallinity is from about 3 percent to about 10 percent (or 3 percent to 10 percent). The degree of crystallinity may be calculated using, for example, density measurements or differential scanning calorimetry (DSC). Suitable techniques are known in the art.

The thermoplastic composition 120' may include additional additives. In some examples, the thermoplastic composition 120' includes a heat stabilizer. In other examples, the thermoplastic composition 120' includes a nucleating agent.

The thermoplastic composition 120' comprises the thermoplastic polymer 116, the polyaryletherketone polymer (118) and optionally the additional additives (e.g. the heat stabilizer and/or nucleating agent). In some examples, the thermoplastic composition 120' consists essentially of, or consists of, these components. By "consists essentially of", it is meant that specific further components can be present, namely those not materially affecting the essential characteristics of the composition.

Referring to FIG. 2, the thermoplastic composition 120' may be extruded into a film 120 for application on a thermoplastic substrate 110 to form a laminate structure 100'. In some examples, the film 120 has a thickness of about 1 mil to about 15 mil (or 1 mil to 15 mil), equivalent to about 0.03 mm to about 0.38 mm (or 0.03 mm to 0.38 mm). The laminate structure 100' may be co-consolidated into a consolidated laminate structure 100, see FIG. 3. In some examples, the consolidated laminate structure 100 includes a thermoplastic substrate 110. The thermoplastic substrate 110 includes a thermoplastic polymer. In some examples, the thermoplastic polymer of the thermoplastic substrate 110 includes a polyaryletherketone polymer.

The thermoplastic substrate 110 may be formed of at least two plies 110' of laminate in a stacked configuration. The at least two plies 110' of laminate may include a polymer from the family of polyaryletherketone (PAEK) polymers. In some examples, the at least two plies 110' of laminate include polyether ketone ketone.

The consolidated laminate structure 100 further includes a thermoplastic composition 120' consolidated with the thermoplastic substrate 110 to define a receiving surface 114 of the consolidated laminate structure 100. The thermoplastic composition 120' includes a thermoplastic polymer 116 and a polyaryletherketone polymer 118 in admixture with the thermoplastic polymer 116.

The thermoplastic polymer 116 of the thermoplastic composition 120' may be selected based upon material properties such as threshold adhesive properties that align with a mating thermoset coating 130 and miscibility with the thermoplastic substrate 110 material such that a first major surface 112 of a receiving thermoplastic substrate 110 is modified to enhance compatibility with a thermoset coating 130. In some examples, the thermoplastic polymer of the consolidated laminate structure 100 includes polyetherimide. The thermoplastic polymer 116 may be amorphous. The thermoplastic polymer 116 is compatible with aerospace grade paints and coatings and is stable at processing temperatures of at least about 350°C (or at least 350°C).

In some examples, the polyaryletherketone polymer 118 of the consolidated laminate structure 100 includes at least one of polyether ether ketone and polyether ketone ketone. In other examples, the polyaryletherketone polymer 118 of the consolidated laminate structure 100 includes a blend of polyether ether ketone and polyether ketone ketone.

In some examples, the ratio of the thermoplastic polymer 116 to the polyaryletherketone polymer 118 by weight is between about 1:20 and about 1:1 (or 1:20 and 1:1). In other examples, the ratio of the thermoplastic polymer 116 to the polyaryletherketone polymer 118 by weight is between about 10:90 and about 50:50 (or 10:90 and 50:50). In other examples, the ratio of the thermoplastic polymer 116 to the polyaryletherketone polymer 118 by weight is between about 1:9 and about 1:1 (or 1:9 and 1:1). In yet other examples, the ratio of the thermoplastic polymer 116 to the polyaryletherketone polymer 118 by weight is between about 20:80 and about 50:50 (or 20:80 and 50:50).

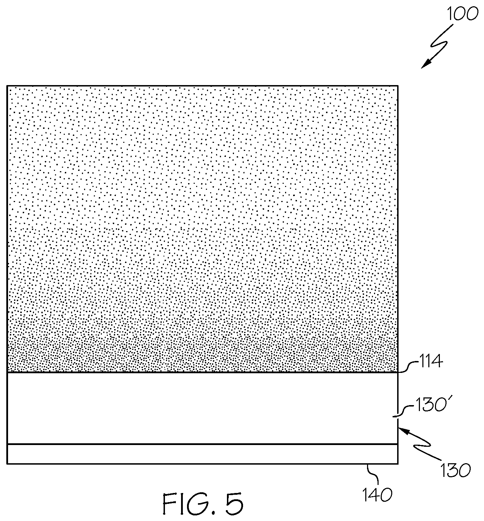

Referring to FIG. 4, the consolidated laminate structure 100 may further include a thermoset material 130' applied to the receiving surface 114. In one example, the thermoset material 130' is in the form of a thermoset coating 130. In some examples, the thermoset material 130' may include an epoxy. In other examples, the thermoset material 130' may be a primer, such as a paint primer. Additionally, the consolidated laminate structure 100 may further include a top coat 140 applied to the thermoset material 130', or primer, see FIG. 5. In some examples, the top coat 140 includes polyurethane.

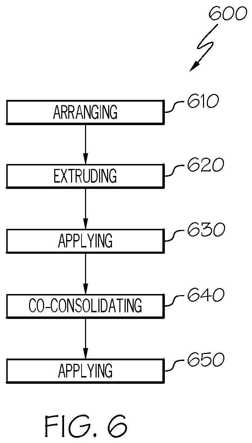

Referring to FIG. 6, disclosed is a method 600 for manufacturing a consolidated laminate structure 100. The method 600 includes applying a thermoplastic composition to a first major surface 112 of a thermoplastic substrate 110. In some examples, the thermoplastic substrate is a layered structure including at least two layers of thermoplastic material.

The thermoplastic composition 120' of the method 600 includes a thermoplastic polymer 116 and a polyaryletherketone polymer in admixture with the thermoplastic polymer 116. In some examples, the thermoplastic polymer 116 comprises polyetherimide. Further, in one or more examples, the polyaryletherketone polymer 118 comprises at least one of polyether ether ketone and polyether ketone ketone, or a blend of polyether ether ketone and polyether ketone ketone.

In some examples, the thermoplastic substrate 110 of the method 600 includes a polyaryletherketone polymer 118. Further, in one or more examples, the polyaryletherketone polymer of the thermoplastic composition 120' and the polyaryletherketone polymer of the thermoplastic substrate 110 are one and the same.

Still referring to FIG. 6, the method 600 further includes co-consolidating 640 the thermoplastic composition with the thermoplastic substrate 110 to define a receiving surface 114. In one or more examples, the co-consolidating 640 is performed at a temperature of about 275 °C to about 400 °C (or 275 °C to 400 °C). In other examples, the co-consolidating 640 is performed at a temperature of about 330 °C to about 400 °C (or 330 °C to 400 °C). In yet other examples, the co-consolidating 640 is performed at a temperature of at least about 340 °C (or at least 340 °C). The co-consolidating 640 may include any means including compression molding or stamp forming.

The method 600 may further include applying 650 a thermoset material 130', such as a thermoset coating 130, to the receiving surface 114. In some examples, the thermoset material 130' of the method 600 includes an epoxy. In other examples, the thermoset material 130' of the method 600 is a primer, such as a paint primer. Referring to FIG. 5, the method 600 may further include applying a top coat 140 to the thermoset material 130'. In other examples, the top coat 140 includes polyurethane.

Still referring to FIG. 6, the method 600 may further include, prior to the applying 630, extruding 620 the thermoplastic polymer 116 and the polyaryletherketone polymer 118 to yield the thermoplastic composition 120'. The extruding 620 may include extruding 620 the thermoplastic composition 120' to a thermoplastic film 120.

The method 600 may further include, prior to the applying 630, arranging 610 at least two plies 110' of laminate in a stacked configuration to yield the thermoplastic substrate 110. The arranging 610 may be performed by any suitable means of arranging plies of laminate. The at least two plies 110' of laminate may include at least one of polyether ether ketone and polyether ketone ketone, or a blend thereof.

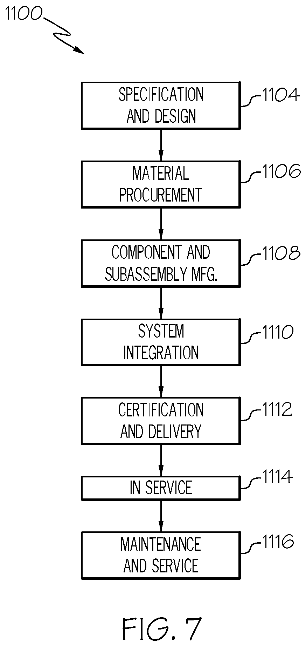

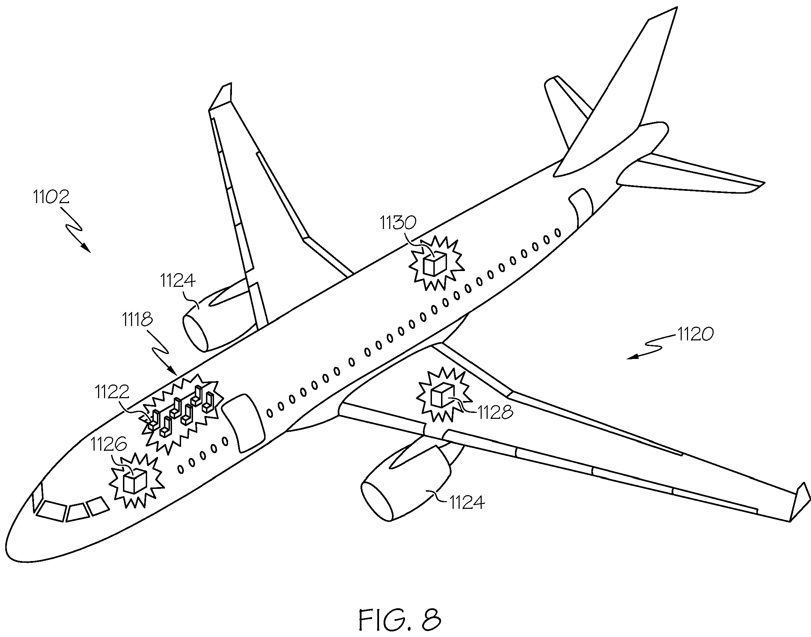

Referring to FIG. 7 and FIG. 8, the disclosed consolidated laminate structure 100, thermoplastic composition 120' and method 600 will be used in the context of aircraft manufacturing and service including material procurement (block 1106), production, component and subassembly manufacturing (block 1108), and certification and delivery (block 1112) of aircraft 1102.

Examples of the subject matter disclosed herein may be described in the context of aircraft manufacturing and illustrative method 1100 as shown in FIG. 7 and aircraft 1102 as shown in FIG. 8. In one or more examples, the consolidated laminate structure 100 comprises a stringer assembly used in aircraft manufacturing. During pre-production, illustrative method 1100 may include specification and design (block 1104) of aircraft 1102 and material procurement (block 1106). During production, component and subassembly manufacturing (block 1108) and system integration (block 1110) of aircraft 1102 may take place. Thereafter, aircraft 1102 may go through certification and delivery (block 1112) to be placed in service (block 1114). While in service, aircraft 1102 may be scheduled for routine maintenance and service (block 1116). Routine maintenance and service may include modification, reconfiguration, refurbishment, etc. of one or more systems of aircraft 1102.

Each of the processes of illustrative method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in FIG. 8, aircraft 1102 produced by illustrative method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

Apparatus(es) and method(s) shown or described herein may be employed during any one or more of the stages of the manufacturing and illustrative method 1100. For example, components or subassemblies corresponding to component and subassembly manufacturing (block 1108) may be fabricated or manufactured in a manner similar to components or subassemblies produced while aircraft 1102 is in service (block 1114). Also, one or more examples of the apparatus(es), method(s), or combination thereof may be utilized during production stages component and subassembly manufacturing (block 1108) and system integration (block 1110), for example, by substantially expediting assembly of or reducing the cost of aircraft 1102. Similarly, one or more examples of the apparatus or method realizations, or a combination thereof, may be utilized, for example and without limitation, while aircraft 1102 is in service (block 1114) and/or during maintenance and service (block 1116).

## Claims

1. A method for coating a thermoplastic substrate with a thermoset material, the method comprising:
applying the thermoplastic composition (120') comprising:
a thermoplastic polymer (116); and
a polyaryletherketone polymer (118) in admixture with the thermoplastic polymer (116)
to a first major surface of a thermoplastic substrate; and
co-consolidating the thermoplastic composition with the thermoplastic substrate to define a receiving surface for a thermoset material.

2. The method of Claim 1 wherein the thermoplastic polymer (116) comprises polyetherimide.

3. The method of Claim 1 or 2 wherein the polyaryletherketone polymer (118) comprises polyether ether ketone and/or polyether ketone ketone.

4. The method of any one of Claims 1-3 wherein the polyaryletherketone polymer (118) comprises a blend of at least two polyaryletherketones.

5. The method of any one of Claims 1-4 wherein a ratio of the thermoplastic polymer (116) to the polyaryletherketone polymer (118) by weight in the thermoplastic composition is between 20:80 and 50:50.

6. The method of any one of Claims 1-5 wherein the thermoplastic composition comprises a degree of crystallinity, measured by density measurement or differential scanning calorimetry, from 1 percent to 30 percent, or from 2 percent to 15 percent, or from 3 percent to 10 percent.

7. The method of any one of Claims 1-6 wherein the polyaryletherketone polymer (118) has a melting temperature of 275 °C to 350 °C.

8. The method of claim 7 wherein the melting temperature is at least about 300 °C.

9. The method of any one of Claims 1-8 wherein the thermoplastic composition further comprises a heat stabilizer and/or a nucleating agent.

10. The method of Claim 1 wherein the thermoplastic substrate comprises a polyaryletherketone polymer and, optionally, the polyaryletherketone polymer of the thermoplastic composition and the polyaryletherketone polymer of the thermoplastic substrate (110) are one and the same.

11. The method of Claim 1 or 10 wherein: the co-consolidating is performed at a temperature of 330 °C to 400 °C; and/or the co-consolidating comprises compression molding the thermoplastic composition with the first major surface of the thermoplastic substrate.

12. The method of claim 11 wherein the co-consolidating is performed at a temperature of at least 340 °C.

13. The method of any one of Claims 1 or 10 to 12, further comprising applying a thermoset material to the receiving surface.

14. The method of claim 13 wherein the thermoset material is an epoxy.

15. The method of any one of Claims 1 or 10 to 14, further comprising, prior to the applying: extruding the thermoplastic polymer and the polyaryletherketone polymer to yield the thermoplastic composition; and/or arranging at least two plies of laminate in a stacked configuration to yield the thermoplastic substrate.

## Patentansprüche

1. Verfahren zum Beschichten eines thermoplastischen Substrats mit einem duroplastischen Material, wobei das Verfahren umfasst:
Aufbringen der thermoplastischen Zusammensetzung (120'), die
ein thermoplastisches Polymer (116) und
ein Polyaryletherketonpolymer (118) als Zusatz zum thermoplastischen Polymer (116) umfasst,
auf eine erste Hauptfläche eines thermoplastischen Substrats;
und
gemeinsames Verfestigen der thermoplastischen Zusammensetzung mit dem thermoplastischen Substrat, um eine Aufnahmefläche für ein duroplastisches Material zu definieren.

2. Verfahren nach Anspruch 1, bei dem das thermoplastische Polymer (116) Polyetherimid umfasst.

3. Verfahren nach Anspruch 1 oder 2, bei dem das Polyaryletherketonpolymer (118) Polyetheretherketon und/oder Polyetherketonketon umfasst.

4. Verfahren nach einem der Ansprüche 1 bis 3, bei dem das Polyaryletherketonpolymer (118) ein Gemisch aus mindestens zwei Polyaryletherketonen umfasst.

5. Verfahren nach einem der Ansprüche 1 bis 4, bei dem das Gewichtsverhältnis des thermoplastischen Polymers (116) zum Polyaryletherketonpolymer (118) in der thermoplastischen Zusammensetzung zwischen 20:80 und 50:50 beträgt.

6. Verfahren nach einem der Ansprüche 1 bis 5, bei dem die thermoplastische Zusammensetzung einen Kristallinitätsgrad, gemessen durch Dichtemessung oder Differential-Scanning-Kalorimetrie, von 1 Prozent bis 30 Prozent oder von 2 Prozent bis 15 Prozent oder von 3 Prozent bis 10 Prozent aufweist.

7. Verfahren nach einem der Ansprüche 1 bis 6, bei dem das Polyaryletherketonpolymer (118) eine Schmelztemperatur von 275 °C bis 350 °C aufweist.

8. Verfahren nach Anspruch 7, bei dem die Schmelztemperatur mindestens etwa 300 °C beträgt.

9. Verfahren nach einem der Ansprüche 1 bis 8, bei dem die thermoplastische Zusammensetzung zusätzlich einen Wärmestabilisator und/oder ein Keimbildungsmittel umfasst.

10. Verfahren nach Anspruch 1, bei dem das thermoplastische Substrat ein Polyaryletherketonpolymer umfasst und optional das Polyaryletherketonpolymer der thermoplastischen Zusammensetzung und das Polyaryletherketonpolymer des thermoplastischen Substrats (110) identisch sind.

11. Verfahren nach Anspruch 1 oder 10, bei dem: das gemeinsame Verfestigen bei einer Temperatur von 330 °C bis 400 °C durchgeführt wird; und/oder das gemeinsame Verfestigen das Formpressen der thermoplastischen Zusammensetzung mit der ersten Hauptfläche des thermoplastischen Substrats umfasst.

12. Verfahren nach Anspruch 11, bei dem das gemeinsame Verfestigen bei einer Temperatur von mindestens 340 °C durchgeführt wird.

13. Verfahren nach einem der Ansprüche 1 oder 10 bis 12, das ferner das Aufbringen eines duroplastischen Materials auf die Aufnahmefläche umfasst.

14. Verfahren nach Anspruch 13, bei dem das duroplastische Material ein Epoxidharz ist.

15. Verfahren nach einem der Ansprüche 1 oder 10 bis 14, das vor dem Aufbringen ferner umfasst: Extrudieren des thermoplastischen Polymers und des Polyaryletherketonpolymers, um die thermoplastische Zusammensetzung zu erhalten; und/oder Anordnen von mindestens zwei Laminatlagen in einer gestapelten Konfiguration, um das thermoplastische Substrat zu erhalten.

## Revendications

1. Procédé de revêtement d'un substrat thermoplastique avec un matériau thermodurcissable, le procédé comprenant les étapes consistant à :
appliquer la composition thermoplastique (120') comprenant :
un polymère thermoplastique (116) ; et
un polymère de polyaryléthercétone (118) en mélange avec le polymère thermoplastique (116) sur une première surface principale d'un substrat thermoplastique ; et
co-consolider la composition thermoplastique avec le substrat thermoplastique pour définir une surface de réception pour un matériau thermodurcissable.

2. Procédé selon la revendication 1, dans lequel le polymère thermoplastique (116) comprend du polyétherimide.

3. Procédé selon la revendication 1 ou 2, dans lequel le polymère de polyaryléthercétone (118) comprend de la polyétheréthercétone et/ou de la polyéthercétonecétone.

4. Procédé selon l'une quelconque des revendications 1 à 3, dans lequel le polymère de polyaryléthercétone (118) comprend un mélange d'au moins deux polyaryléthercétones.

5. Procédé selon l'une quelconque des revendications 1 à 4, dans lequel un rapport du polymère thermoplastique (116) au polymère de polyaryléthercétone (118) en poids dans la composition thermoplastique est compris entre 20:80 et 50:50.

6. Procédé selon l'une quelconque des revendications 1 à 5, dans lequel la composition thermoplastique comprend un degré de cristallinité, mesuré par mesure de densité ou calorimétrie différentielle à balayage, de 1 pour cent à 30 pour cent, ou de 2 pour cent à 15 pour cent, ou de 3 pour cent à 10 pour cent.

7. Procédé selon l'une quelconque des revendications 1 à 6, dans lequel le polymère de polyaryléthercétone (118) présente une température de fusion de 275°C à 350°C.

8. Procédé selon la revendication 7, dans lequel la température de fusion est d'au moins environ 300°C.

9. Procédé selon l'une quelconque des revendications 1 à 8, dans lequel la composition thermoplastique comprend en outre un stabilisant thermique et/ou un agent de nucléation.

10. Procédé selon la revendication 1, dans lequel le substrat thermoplastique comprend un polymère de polyaryléthercétone et, facultativement, le polymère de polyaryléthercétone de la composition thermoplastique et le polymère de polyaryléthercétone du substrat thermoplastique (110) sont identiques.

11. Procédé selon la revendication 1 ou 10, dans lequel : la co-consolidation est effectuée à une température de 330°C à 400°C ; et/ou la co-consolidation comprend un moulage par compression de la composition thermoplastique avec la première surface principale du substrat thermoplastique.

12. Procédé selon la revendication 11, dans lequel la co-consolidation est effectuée à une température d'au moins 340°C.

13. Procédé selon l'une quelconque des revendications 1 ou 10 à 12, comprenant en outre une application d'un matériau thermodurcissable sur la surface de réception.

14. Procédé selon la revendication 13, dans lequel le matériau thermodurcissable est un époxy.

15. Procédé selon l'une quelconque des revendications 1 ou 10 à 14, comprenant en outre, avant l'application : une extrusion du polymère thermoplastique et du polymère de polyaryléthercétone pour produire la composition thermoplastique ; et/ou un agencement d'au moins deux couches de stratifié dans une configuration empilée pour produire le substrat thermoplastique.
